Europäisches Patentamt

**European Patent Office**

Office européen des brevets

(11) Publication number: **0 056 192**
A1

## EUROPEAN PATENT APPLICATION

(21) Application number: **81306129.8**

(22) Date of filing: **24.12.81**

(51) Int. Cl.³: **G 02 B 7/26**

(30) Priority: **08.01.81 US 223362**

(43) Date of publication of application: **21.07.82**
Bulletin **82/29**

(84) Designated Contracting States: **AT BE CH DE FR GB IT LI LU NL SE**

(71) Applicant: **Litton Systems, Inc., 360 North Crescent Drive, Beverly Hills California 90210 (US)**

(72) Inventor: **Knowles, Robert G., South Lake Street, Litchfield Connecticut 06759 (US)**

(74) Representative: **Cheyne, John Robert Alexander Mackenzie European Patent Attorney et al, Haseltine Lake & Co. Hazlitt House 28 Southampton Buildings Chancery Lane, London WC2A 1AT (GB)**

(54) A fibre optic connection, a method of making the connection, and a fibre optic cable for use in the connection.

(57) A fibre optic connection comprises two fibre optic cables (19) mounted in ferrules (14). An optic fibre (22) of each cable (19) extends to an end face of its ferrule (14). That end face of the ferrule (14) is provided with a concave surface (24). The ferrules (14) are mounted in a connector body (12) with their end faces in contact. The concave end surfaces (24) automatically ensure that the fibre ends are the correct distance apart.

-1-

A FIBRE OPTIC CONNECTION, A METHOD OF MAKING THE CONNECTION, AND A FIBRE OPTIC CABLE FOR USE IN THE CONNECTION.

This invention relates to fibre optic connections.

Connectors for fibre optic cables are known. In such connectors, the signal loss across the interface of two optic fibres is a function of the distance between the ends of the fibres. While this distance is optimally kept very small, the fibres should not touch. In order to maintain a close tolerance separation between the adjacent ends of two optic fibres, it has been necessary to maintain very close tolerances on the components of the connector. Such procedures are expensive and lead to a high rejection rate in finished connectors.

The present invention is intended to provide a connection in which the adjacent ends of two optic fibres are maintained in close proximity to one another without touching.

In a connection in accordance with the present invention, the interconnected optic fibres are mounted in ferrules. The end of at least one of the ferrules and its optic fibre is polished with a spherical element to form a concave surface. The outer edges of two ferrules abut each other, but the polished faces of the optic fibres will be maintained spaced from one another.

For a better understanding of the present invention, and to show how it may be carried into effect, reference will now be made, by way of example, to the accompanying drawings, in which:

Figure 1 shows a fibre optic connection; and

Figure 2 shows an enlarged detail of the connection of Figure 1.

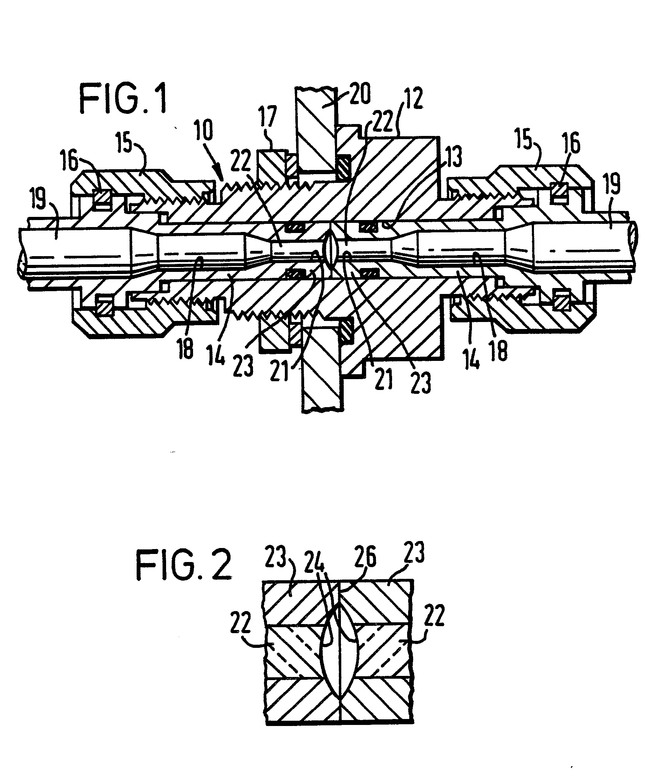

The fibre optic connection of Figure 1 is generally designated by the reference numeral 10. The connection comprises a connector body 12 having an internal bore 13. The bore is dimensioned to receive a ferrule 14 inserted from each end of the connector body 12 and can be rotated to advance each ferrule to the midpoint thereof. A retaining nut 17 holds the connector body securely in an aperture in a wall 20.

Each ferrule 14 has an inner bore 18 which is dimensioned to receive a fibre optic cable 19. A forward end 21 of each bore 18 is dimensioned to receive an optic fibre 22 of the cable 19. The cable 19 may be fixed within the inner bore 18 by an adhesive or other suitable means.

Turning now to Figure 2, it will be seen that the forward end 23 of each ferrule 14 and the fibre 22 which it contains have been polished with a spherical element so as to form a concave surface 24. It will be appreciated that the two ferrules 14 may be advanced towards one another by the locknuts 15 to bring the flat outer peripheral faces 26 of the ferrules 14 into contact. This contact will maintain the optic fibre ends 27 spaced from one another, at their axes, by a distance which is twice the depth of the concavity of one of the surfaces 24 measured at the axis of the optic fibre. In actual practice, it has been found that a gap of 0.0001 inches (0.025 microns) to 0.0008 inches (0.2 microns) maintained between the fibre ends is optimum.

It will be appreciated that alternative constructions to that illustrated may be used in practising the invention. In some instances, it may be desirable to polish only one ferrule and fibre end with a spherical

C056192

or other convex element and the other ferrule and fibre
end with a flat element.  Also, the entire ferrule end
may be ground to a concave shape to eliminate completely
the flat outer peripheral faces.

CLAIMS

1. A fibre optic connection comprising two optic fibres (22) the ends of which are disposed adjacent each other, characterised in that the optic fibres (22) are mounted in respective ferrules (14), which abut each other, at least one of the ferrules (14) and the optic fibre (22) which it contains having a concave end surface (24) whereby the ends of the optic fibres (22) are spaced from each other.

2. A fibre optic connection as claimed in claim 1, characterised in that both the ferrules (14) and optic fibres (22) have the concave end surfaces (24).

3. A fibre optic connection as claimed in claim 1 or 2, characterised in that the or each concave end surface (24) is spherical.

4. A fibre optic connection as claimed in any one of the preceding claims, characterised in that a flat radial surface (26) of the respective ferrule (14) surrounds the or each concave end surface (24) and abuts the other ferrule (14).

5. A fibre optic connection as claimed in any one of the preceding claims, characterised in that the ferrules (14) are slidably received in a bore (13) of a connector body (12).

6. A fibre optic connection as claimed in claim 5, characterised in that adjusting means (15) is provided for advancing the ferrules (14) towards each other in the bore (13).

7. A method of making a fibre optic connection between two fibre optic cables (19), characterised in that the method comprises the steps of:

a) mounting each cable (19) in a respective ferrule (14) with an optic fibre (22) of the respective cable (19) extending to an end face of the ferrule (14);

b) finishing the end face of each ferrule (14) so that the end of the respective optic fibre (22) is flush with the end face of its ferrule (14), at least one of the ferrules (14) being provided, by the finishing step, with a concave end surface (24); and

    c) bringing the ferrules (14) into axial abutment.

    8. A fibre optic cable (19), characterised in that an end of the cable (19) is received in a ferrule (14), an optic fibre (22) of the cable (19) extending to an end face of the ferrule (14), the ferrule (14) and the fibre (22) being formed with a concave end surface (24).

0056192

1/1

FIG.1

FIG.2

0056192

| Category | Citation of document with indication, where appropriate, of relevant passages | Relevant to claim |
|---|---|---|
| X,Y | DE - A - 2 910 860 (LICENTIA-PATENT-VERWALTUNGS) | |
| | * pages 5-6 and figures 1-3 * | 1-8 |
| Y | EP - A - 0 011 561 (RADIALL) | |
| | * page 7 and figures 1-8 * | 1,4-7 |

**CLASSIFICATION OF THE APPLICATION (Int. Cl. 3)**

G 02 B 7/26

**TECHNICAL FIELDS SEARCHED (Int.Cl. 3)**

G 02 B 7/26

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 19-02-1982 | MALIC |

EPO Form 1503.1 06.78